# EUROPÄISCHE PATENTANMELDUNG

(11) **EP 1 612 041 A1**
(43) Veröffentlichungstag der Anmeldung: **04.01.2006**
(21) Anmeldenummer: 05013770.2
(22) Anmeldetag: 27.06.2005
(51) Int. Cl.: B32B 17/10, B29C 73/02, B24B 7/22

(54) **Verfahren zur Reparatur von sichtbaren Fehlern in der Oberfläche von Glasscheiben insbesondere in Frontscheiben von Kraftfahrzeugen**

(30) Priorität: 28.06.2004 DE 102004031353
(71) Anmelder: Schacht, Bernd, 15827 Dahlewitz (DE)
(72) Erfinder: Schacht, Bernd, 15827 Dahlewitz (DE)
(74) Vertreter: Hanelt, Holger

(57) **Zusammenfassung**

Die Erfindung betrifft ein Verfahren zur Reparatur von sichtbaren Fehlern in der Oberfläche von Glasscheiben, insbesondere in Frontscheiben von Kraftfahrzeugen und eine dazugehörige Anordnung. Sie ist besonders geeignet, Fehler in Glasscheiben, insbesondere in Frontscheiben von Kraftfahrzeugen, die durch Steinschlag entstanden sind, wirkungsvoll zu beheben.

Die Aufgabe der Erfindung ist es daher, ein Verfahren zur Reparatur von sichtbaren Fehlern in der Oberfläche von Glasscheiben, insbesondere in Frontscheiben von Kraftfahrzeugen vorzuschlagen, mit dem es möglich ist, diesen Fehler so zu beseitigen, dass nach der Reparatur weder optische noch mechanische Mängel nachweisbar sindwird gelöst, indem im Bereich um die Schadstelle so viel Glasmaterial abgetragen, dass eine Ausnehmung mit einer regelmäßig geformten geometrischen Struktur entsteht.

In die entstandene Ausnehmung wird ein Glaskörper mit mindestens einer planen Oberfläche, der in seiner geometrischen Struktur mit dieser Ausnehmung identisch, ist eingesetzt.

## Beschreibung

Die Erfindung betrifft ein Verfahren zur Reparatur von sichtbaren Fehlern in der Oberfläche von Glasscheiben, insbesondere in Frontscheiben von Kraftfahrzeugen und eine dazugehörige Anordnung. Sie ist besonders geeignet, Fehler in Glasscheiben, insbesondere in Frontscheiben von Kraftfahrzeugen, die durch Steinschlag entstanden sind, wirkungsvoll zu beheben.

Es ist bereits bekannt, Glasdefekte mit Hilfe von speziellen Harzen und

Werkzeugen zu verkleben, wobei das Hauptaugenmerk auf der Beseitigung von Rissen und Splitterungen in der betreffenden Glasscheibe liegt. Die zerstörte Oberfläche wird ebenfalls mit Harz ausgefüllt, geglättet und poliert. Diese Behandelung der Oberflächenverletzung hat aber den Nachteil, dass das an der Oberfläche liegende Harz zum Einen bei weitem nicht die Oberflächenhärte des umliegenden Materials hat und zum Anderen durch Umwelteinflüsse verhältnismäßig schnell und stark altert. Die Reparaturstelle wird matt, ausgewaschen oder durch Schmutzanlagerung unansehnlich und somit der Zielstellung einer hohen Reparaturqualität nicht gerecht.

Gemäß der in der AT E 46663 B beschriebenen Erfindung wird ein Verfahren zum Reparieren eines Sprungs in einer geschichteten Windschutzscheibe vorgeschlagen, das folgende Arbeitsschritte enthält: ein Haltegerät über dem Sprung in der Windschutzscheibe in die passende Lage zu bringen, ein Haltegerät auf der Windschutzscheibe festzumachen, in das Haltegerät eine Schraube mit einer zylindrischen Längsbohrung und an einem Ende einen Dichtungsring einzusetzen, der auf die Windschutzscheibe zu gerichtet wird, die Schraube relativ zum Haltegerät abwärts zu drehen, bis der am einen Ende der Schraube befindliche Dichtungsring einen im in allgemeinen gas- und flüssigkeitsdichten Abschluss mit der Windschutzscheibe rund um den Sprung bildet. Darauf wird ein Reparatur-Material durch die Schraube zum Sprungbereich der Windschutzscheibe eingespritzt, über der vom Dichtungsring umgebenen Fläche der Windschutzscheibe ein Vakuum zum Absaugen der Luft aus dem Sprung der Windschutzscheibe erzeugt, um nach dem Ende des Absaugens der Luft aus dem Sprung einen positiven Druck über der von dem Dichtungsring umgebenen Fläche der Windschutzscheibe etwa 3 bis 10 Minuten lang zu erzeugen und dadurch das Reparatur-Material in den Sprung der Windschutzscheibe zu treiben.

In der US 4 744 841 wird vorgeschlagen, zur besseren Verteilung des Kunstharzes den zu reparierenden Bereich gleichzeitig aufzuheizen und vibrieren zu lassen.

Die japanische Schrift 2000335383 A schlägt vor, die zu reparierende Stelle durch Strahlung aufzuheizen, mit Hilfe einer Injektionsnadel Harz in den Grund der zu reparierenden Stelle zu applizieren, den umgebenden Bereich mit einer Klebefolie abzudecken und durch diese hindurch die Bruchstelle vollständig auszufüllen.

Weitere Vorrichtungen, mit denen das Harz in die Bruchstelle eingeführt werden kann, beschreiben die US PS 5 407 338 und die US PS 6 485 281 B1. Um das Einbringen des Klebstoffs in die Schadstelle gewährleistet, einfach und sicher zu gewährleisten und die mechanische Belastungen der Schadstelle zu vermeiden wird in der DE 88 06 284 U 1 eine Vorrichtung vorgeschlagen, bei deren Handhabung zunächst ein ausreichender Unterdruck vorgegebener Größe erzeugt wird und dass erst dann, wenn dieser aufgebaut ist, der Kunstharz-Klebstoff auf die Schadstelle gelangt, während der Unterdruckphase durch Kapillarkräfte in diese einläuft und erst danach durch den Atmosphärendruck in die Schadstelle eingepresst wird, ohne dass manuell ein Druck erzeugt werden müsste. Dadurch wird vermieden, dass der Einpressdruck zu groß wird oder dass durch manuellen Druck auf die Vorrichtung und damit versehentlich auf die Schadstelle selbst diese zusätzlich beschädigt wird. In allen bekannten Schriften wird jedoch darauf verwiesen, dass der durch den Steinschlag oder andere Beschädigungen entstandener Hohlraum mit einem Kunstharz ausgefüllt wird. Dabei kann hier doch in den wenigsten Fällen gewährleistet werden, dass die entstandene neue Oberfläche absolut plan und bündig mit der alten Oberfläche ist. Auch wenn anschließend durch einen Nacharbeitsprozess die Oberfläche geglättet wird, können optische Mängel nie vollständig beseitigt werden, da zum Einen immer gewisse Bearbeitungsspuren in der gegenüber der Glasoberfläche weicheren Oberfläche des Kunstharzes zurückbleiben. Diese werden in der Regel durch die Umwelteinflüsse und bei Kfz-Scheiben auch noch durch die Scheuerwirkung der Scheibenwischer verstärkt, so dass der Gesetzgeber die Anwendung derartiger Verfahren im Hauptsichtbereich der Kfz-Frontscheiben untersagt.

Die Aufgabe der Erfindung ist es daher, ein Verfahren zur Reparatur von sichtbaren Fehlern in der Oberfläche von Glasscheiben, insbesondere in Frontscheiben von Kraftfahrzeugen vorzuschlagen, mit dem es möglich ist, diesen Fehler so zu beseitigen, dass nach der Reparatur weder optische noch mechanische Mängel nachweisbar sind.

Hierzu schlägt die Erfindung vor, die defekte Stelle, zumindest in einem Bereich, in dem die Zerstörungen nicht nur Haarrisse sind, entsprechend den Merkmalen des Hauptanspruches durch einen vorgefertigten Glaskörper zu ersetzen.

Dazu werden die defekten Bereiche abgetragen. Hierzu wird im Bereich um die Schadstelle durch Ausfräsen, Ausschleifen, Ausbohren oder durch andere bekannte Verfahren der Schadstelle, zusätzlich zu der gestörten Kristallstruktur so viel Glasmaterial abgetragen, dass eine Ausnehmung mit einer regelmäßig geformten geometrischen Struktur entsteht.

In die entstandene Ausnehmung wird ein Glaskörper mit mindestens einer planen Oberfläche, der in seiner geometrischen Struktur mit dieser Ausnehmung identisch ist, eingesetzt. Dieser Glaskörper wird durch Verkleben, Verschmelzen oder Einkitten so in die Ausnehmung der Glasscheibe eingefügt, dass eine ebene Oberfläche dieses Glaskörpers bündig mit der Glasscheibe abschließt.

Da sich eine Glasoberfläche mit bekannten Verfahren relativ gut polieren lässt, kann der Glaskörper auch so in die Ausnehmungen der Glasscheibe eingefügt werden, dass er geringfügig aus der Oberfläche der Glasscheibe hervorragt. In diesem Falle muss der aus der Oberfläche der Glasscheibe herausragende Teil des Glaskörpers nach dem Verbinden von Glaskörper und Glasscheibe so weit abgetragen werden, dass die verbleibende Oberfläche des Glaskörpers bündig mit der Glasscheibe abschließt.

Es ist jedoch auch möglich und im Sinne der Erfindung, wenn der Glaskörper mit seiner planen Fläche an der planen Oberfläche eines Hilfskörpers lösbar befestigt wird und dieser Hilfskörper so auf die Glasscheibe aufgesetzt wird, dass die plane Oberfläche auf der Glasscheibe aufliegt und der Glaskörper in die Ausnehmung in der Glasscheibe hinein ragt. Als Hilfskörper kann bei kleineren Glaskörpern ein bekanntes Klebeband verwendet werden. Dazu kann die Ausnehmung vorher mit einem Harz, Kitt oder anderen Bindemitteln gefüllt werden, die nach dem Einsetzen des Glaskörpers diesen mit der Glasscheibe verbinden. Nachdem dieser Hilfskörper nach dem Verbinden von Glaskörper und Glasscheibe vom Glaskörper abgelöst wird, ist die Oberfläche exakt bündig mit der Oberfläche der Glasscheibe ausgerichtet.

Um zu gewährleisten, dass die Volumina der durch ein abrasives Verfahren hergestellten Ausnehmung in der zu reparieren Glasfläche, und des mit der Oberfläche der Glasfläche eben abschließenden Glaskörpers angepasst werden können, schlägt die Erfindung vor, dass diese Volumina eine regelmäßig geformte geometrische Struktur aufweisen.

Für die Fertigung ist hierbei besonders vorteilhaft, wenn der Glaskörper die Form eines Rotationskörpers hat, der rechtwinklig zu seiner Rotationsachse eine ebene Fläche aufweist.

Hierzu schlägt die Erfindung vor, dass sowohl die Ausnehmungen als auch der Glaskörper die Form eines Kugelabschnittes, eines Kegelstumpfes, eines Zylinders oder eine aus einer Kombination der zuvor genannten geometrischen Körper zusammengesetzte Form hat.

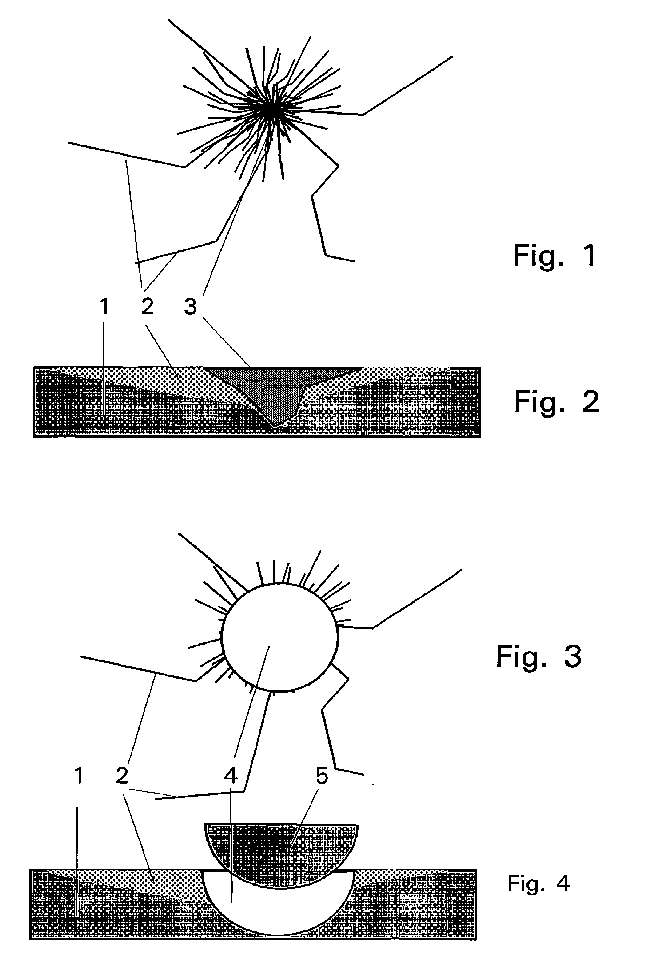

Im Folgenden soll die Erfindung anhand eines Ausführungsbeispiels mit Hilfe der Zeichnungen Figur 1 bis 4 erläutert werden.

Dabei zeigt:
- Fig. 1: die Draufsicht auf einen Steinschlag
- Fig. 2: einen Querschnitt durch den Steinschlag
- Fig. 3: der Steinschlag aus Figur 1 mit ausgefrästem Kernbereich
- Fig. 4: das Einsetzen des Glaskörpers.

Bei einem Steinschlag in einer Pkw-Frontscheibe kommt es in der Regel in einem Zentralbereich 3 um den Auftreffpunkt zu einer sehr feingliedrigen Zerstörung der Glasstruktur. Die entstehenden Splitter im Mikrometerbereich führen zu einer vollständigen Trübung im näheren Umfeld des Auftreffpunktes. Nur einzelne Sprünge 2 gehen als Haarrisse sternförmig von diesem Punkt aus. Um einen solchen Fehler erfindungsgemäß zu beseitigen, wird der Zentralbereich 3, in dem durch die feingliedrige Zerstörung eine Trübung festzustellen ist und der diese Störung umgebende Bereich so ausgeschliffen, dass eine halbkugelförmige Ausnehmung 4 entsteht. In diese Ausnehmung 4 hinein wird ein flüssiges Kunstharz gegeben, wie es für bekannte Steinschlagreparaturen verwendet wird. Auf Grund der Kapillarwirkung füllt dieses Harz die von der Ausnehmung 4 radial ausgehenden Haarrisse 2 aus, wodurch diese wegen des identischen Berechnungsindexes des Glases und des Harzes unsichtbar werden. Anschließend wird ein halbkugelförmiger Glaskörper 5 in die Ausnehmung 4 so eingefügt, dass er nach Abbinden des Harzes bündig mit der Oberfläche der Scheibe abschließt. Nach der Beseitigung überschüssigen Harzes ist die Einschlagstelle nicht mehr zu erkennen.

## Patentansprüche

1. Verfahren zur Reparatur von sichtbaren Fehlern in der Oberfläche von Glasscheiben, insbesondere in Frontscheiben von Kraftfahrzeugen, durch Abtragen defekter Bereiche, insbesondere Ausfräsen oder Ausbohren der Schadstelle und anschließendes Verfüllen der entstandenen Ausnehmung mit glasklaren Substanzen, **dadurch gekennzeichnet, dass** zusätzlich zu der gestörten Kristallstruktur so viel Glasmaterial abgetragen oder durch bekannte Verfahren entfernt wird, dass eine Ausnehmung mit einer regelmäßig geformten geometrischen Struktur entsteht, das weiterhin ein Glaskörper mit mindestens einer planen Oberfläche gefertigt wird, der in seiner geometrischen Struktur mit dieser Ausnehmung identisch ist, sowie dass dieser Glaskörper in die Ausnehmung eingefügt und durch Verkleben, Verschmelzen oder Einkitten so in die Ausnehmung der Glasscheibe eingefügt wird, dass eine ebene Oberfläche dieses Glaskörpers bündig mit der Glasscheibe abschließt.

2. Verfahren nach Anspruch 1, **dadurch gekennzeichnet, dass** der Glaskörper so in die Ausnehmungen der Glasscheibe eingefügt wird, dass er aus der Oberfläche der Glasscheibe hervor ragt und dass der aus der Oberfläche der Glasscheibe herausragender Teil des Glaskörpers nach dem Verbinden von Glaskörper und Glasscheibe so weit abgetragen wird, dass die verbleibende Oberfläche des Glaskörpers bündig mit der Glasscheibe abschließt.

3. Verfahren nach Anspruch 1, **dadurch gekennzeichnet**, das der Glaskörper mit seiner planen Fläche an der planen Oberfläche eines Hilfskörpers lösbar befestigt wird und dass dieser Hilfskörper so auf die Glasscheibe aufgesetzt wird, dass die planen Oberfläche auf der Glasscheibe aufliegt und der Glaskörper in die Ausnehmung in der Glasscheibe hinein ragt sowie dass der Hilfskörper nach dem Verbinden von Glaskörper und Glasscheibe vom Glaskörper abgelöst wird.

4. Anordnung zur Reparatur von örtlichen Defekten in Glasflächen, insbesondere in Frontscheiben von Kraftfahrzeugen nach einem der voran stehenden Ansprüche, **dadurch gekennzeichnet, dass** in einer durch ein abrasives Verfahren hergestellten Ausnehmung in der zu reparieren Glasfläche, deren Volumen einer den Defekt umschließende regelmäßig geformte geometrische Struktur hat, ein dieses Volumen ausfüllender und mit der Oberfläche der Glasfläche eben abschließender Glaskörper angeordnet ist, der mit der Glasfläche durch bekannte Verfahren porenfrei verbunden ist.

5. Anordnung nach Anspruch 4, **dadurch gekennzeichnet, dass** der Glaskörper die Form eines Rotationskörpers hat, der rechtwinklig zu seiner Rotationsachse eine Ebene Fläche aufweist.

6. Anordnung nach Anspruch 5, **dadurch gekennzeichnet, dass** die regelmäßig geformte geometrische Struktur ein Kugelabschnitt ist.

7. Anordnung nach Anspruch 5, **dadurch gekennzeichnet, dass** die regelmäßig geformte geometrische Struktur ein Kegelstumpf ist.

8. Anordnung nach Anspruch 5, **dadurch gekennzeichnet, dass** die regelmäßig geformte geometrische Struktur ein Zylinder ist.

9. Anordnung nach Anspruch 5, **dadurch gekennzeichnet, dass** die regelmäßig geformte geometrische Struktur ein aus einem oder mehreren der in den Ansprüche 6 bis 8 genannten geometrischen Körper zusammengesetzte Form hat.
